# EUROPEAN PATENT APPLICATION

(11) **EP 3 909 887 A1**
(43) Date of publication of application: **17.11.2021**
(21) Application number: 20382395.0
(22) Date of filing: 13.05.2020
(51) Int. Cl.: B65D 75/58, B65D 83/08

(54) **CLOSURE LABEL FOR PACKAGES OF WET WIPES OR SIMILAR PRODUCTS AND PACKAGE**

(71) Applicant: Inversiones y Finanzas Pecolyt Torrellano, S.L., 03540 Alicante (ES)
(72) Inventor: Mira Navarro, Miguel Angel, 03540 Alicante (ES)
(74) Representative: Carlos Hernando, Borja

(57) **Abstract**

The present invention relates to a closure label for packages of wet wipes or similar products and to a package, said closure label being of the type intended for being incorporated in a package containing consumable products, mainly wet wipes or similar products susceptible to drying up upon prolonged contact with the air, comprising a laminar body the structure of which is specifically designed to enable being used directly as a practicable closure of the pack which allows opening and resealing the mouth of the package for pulling out the products as many times required and as a fixing base for incorporating a rigid practicable closure lid which, in turn, is preferably reusable with other packages, which therefore allows reducing costs and optimizing management of the generated plastic waste and, accordingly, favors environmental care. The invention also relates to a package with said label.

## Description

### OBJECT OF THE INVENTION

The present invention, a closure label for packages of wet wipes or similar products and a package, relates to a closure label of the type intended for being incorporated in a package containing consumable products, mainly wet wipes or similar products susceptible to drying up upon prolonged contact with the air, comprising a laminar body the structure of which is specifically designed to enable being used directly as a practicable closure of the pack which allows opening and resealing the mouth of the package for pulling out the products as many times required and as a fixing base for incorporating a rigid practicable closure lid which, in turn, is preferably reusable with other packages, which therefore allows reducing costs and optimizing management of the generated plastic waste and, accordingly, favors environmental care. The invention also relates to a package with said label.

The field of application of the present invention is comprised in the sector of packages and packs for consumer goods, focusing particularly on the area of industry dedicated to the manufacture of closure systems for said packages, particularly closure systems in the form of plastic labels for packages in the form of a plastic pouch according to the flow-pack system.

### BACKGROUND OF THE INVENTION

As is known, packages for products such as wet wipes, which are incorporated in the package in stacks and are slowly pulled through a mouth so that they can be used, usually have a practicable or resealable closure system that allows opening and closing the pack so as to prevent, to the greatest extent possible, the still unused product from being in prolonged contact with the air and drying up.

Up until now, said closure has usually comprised a rigid plastic lid which is permanently fixed on the mouth of the package during the manufacture thereof. In addition to increasing the cost of manufacturing the package, this makes it uncommon to separate the different types of plastic materials forming it to correctly recycle same, therefore ending up in the refuse waste bin, and therefore not helping to protect the environment. Alternatively, packages having a resealable label arranged on the mouth of the package are known.

The objective of the present invention is, therefore, the development of an improved resealable closure system for said type of packages that allows solving the various drawbacks existing, that is:
- ensuring and improving the air-tightness of the content of the package by means of a system which allows a double air-tightness,
- reducing the manufacturing cost, preventing each package from having to include its own rigid lid,
- facilitating the separation of materials once the service life of the products has ended so as to allow correctly recycling the generated plastic waste, such that the packages may be disposed of after using the products contained therein, since they are made of a single type of plastic material, and
- being able to reuse one and the same rigid plastic lid multiple times in successive packages and, once their service life has concluded, also being able to be taken separately to the corresponding waste bin for recycling thereof.

Likewise, it is possible to combine the preceding solution with different labels presenting different configurations and having particular opening means, such as, for example, the practicable area of the label being made of a flexible material, or of a rigid material, with a single-layer or multi-layer sheet, which may or may not have guarantee seals, having different solutions for folding or bending of the practicable area, and/or having different closure or adhesion systems, among other features. Therefore, the present invention is not limited to a label as such with a specific configuration in any of its general features, as mentioned above.

### DISCLOSURE OF THE INVENTION

The first object of the closure label for packages of wet wipes or similar products is a label according to claim 1.

Namely, the label object of the invention is a label intended for being incorporated on the mouth for gradually pulling products out of a flow-pack type package, made of a flexible plastic material, containing consumable products such as wet wipes or other similar products, usually susceptible to drying up upon prolonged contact with the air, and is distinguished in that it comprises a flexible laminar body the structural configuration of which allows it to be used directly as a practicable or resealable closure of the pack that allows opening the mouth for pulling out the products and sealing it again as many times required, and furthermore, as a fixing base, should the user desire, for incorporating a rigid practicable or resealable closure lid which, in turn, is preferably reusable with other packages.

To that end, the closure label of the invention formed from a laminar body of single-layer or multi-layer, flexible or rigid plastic material, comprising a perforated line defining a practicable central area and a perimeter frame, in which said central area is susceptible to being able to be opened or lifted, and closed or lowered again through a hinged attachment defined by the perforated line made in the sheet of plastic material. The label, and preferably the central area thereof, has a flap or tab on some of its sides to facilitate the opening and closure, or lifting or lowering of the mentioned central area. This flap or tab is preferably arranged on the side opposite the hinged attachment and is also defined by a perforated line of the label.

An articulation existing in the laminar body forming the label is to be understood as a hinged attachment, such that it allows the movement of a mobile part of the body with respect to a fixed part. Said hinged attachment has a perforation or cuts in the laminar body, combined with non-perforated parts which are bent or articulated upon lifting or opening and lowering or closing the mobile part with respect to the fixed part, i.e., the central area with respect to the fixed area of the label.

The side flap or tab and the hinged attachment are also preferably positioned on opposite sides of the interior of the perimeter frame, and on opposite sides of the exterior of the central area. At least the practicable central area of the main layer incorporates in the lower part a first removable adhesive label for the opening and closing of said central area multiple times on the upper surface of the package where the mouth is positioned. Preferably said first adhesive label also extends below the rest of the label, although another more resistant adhesive label could also be used for said rest of the label. The label additionally incorporates on the upper face of the perimeter frame a second adhesive label, in this case possibly covered by a removable protective sheet. Said protective sheet is preferably a siliconized protective paper or plastic, said frame being suitable for adhering thereto a rigid lid preferably made of polypropylene (PP), in turn comprising a base surround fixed to the frame of the label, and a lift-up cover with respect to said base surround.

Furthermore, in a preferred embodiment, the second adhesive label of the upper face of the frame of the label is more resistant than the first adhesive label, i.e., it has greater adherence, though not reaching 100%, because it must allow both the removal of the preferably siliconized paper or plastic and the adhering and detachment of a rigid lid. The adhesive label arranged on the upper face of the perimeter frame must allow:
- putting the rigid lid on and taking it off,
- supporting the weight of the package with its content when held by the rigid lid,
- reusing the rigid lid in another pack, so no residue can be left on same once the rigid lid has been removed.

A lid may thereby be used in different packages, whereby reducing not only the use of plastic with the subsequent ecological advantage entailed, but it also allows customizing labels to be reused in different packages.

The shapes of the label, as well as the shape of the rigid lids, may vary.

Based on the foregoing, once the label has been incorporated on the mouth of the package, it can be used directly as a closure thereof, keeping the interior moisture unchanged, using the flap to lift the central area as many times required, since it will be attached to the frame through the hinged attachment and may be adhered again as a result of the removable adhesive label provided in both parts, i.e., in the flap and in the hinge. Likewise, to achieve a double sealing in the package, it may additionally be positioned on the label a rigid lid such as described above. To that end, the preferably siliconized protective paper or plastic covering the adhesive label of the frame, preferably a second adhesive label, is removed and the rigid lid is positioned thereon. The tab of the label will be arranged on the rigid lid, like it was arranged on the perimeter frame, to facilitate the opening of the label as it is easier for a user holding the label through said tab. In this manner, once the product in the package has been used, the rigid lid may, after being detached from the label, be reused in another package having the closure label of the invention.

Based on the foregoing, the invention allows ensuring the air-tightness of the package since in addition to the resealable closure of the flexible label, it incorporates or may incorporate a rigid lid to achieve said double air-tightness.

To facilitate the removal of the paper or plastic arranged on the perimeter frame, said perimeter frame incorporates a cut at some point of its perimeter to facilitate the removal of said paper or plastic by the user, preferably by introducing a fingernail in said cut between the paper or plastic and the perimeter frame.

In one alternative of the label of the present invention, the sheet is a flexible sheet that can be bent such that the central area is bent with respect to a fixed area, preferably separated by a hinged attachment formed by a perforation, although it may not incorporate said perforation to allow lifting the practicable central area with respect to another fixed area. In any case, the practicable central area, which is lifted to cover the mouth of the package or not, may present different configurations and designs always inscribed within the previously described perimeter frame.

In a second preferred alternative of the label of the present invention, the hinge with a perforation has a configuration such that it allows maintaining the central area at about 90° with respect to the upper surface of the package on which the mouth thereof is arranged. This label comprises a perimeter frame and has a flat laminar body which is a rigid single-layer body (formed by a single layer), and where the hinged attachment is a perforation the design of which allows keeping the central area approximately perpendicular with respect to the fixed area or the upper surface of the package when the label is lifted or opened and allowing access to the mouth of the package providing access to the product contained therein. Said central area is also perforated along its perimeter to enable being separated from the perimeter frame. As mentioned, the laminar body is flat and rigid, and rigid must be understood to mean that it does not deform, particularly when it is arranged perpendicular with respect to the fixed area, i.e., not bent, the laminar body remaining flat, without flexing or bending.

The main objective of this second preferred form of the label is to achieve that it stays open, lifted, at least 90° with respect to the surface of the mouth for accessing the interior of the package, this surface coinciding with that of the package on which the label is arranged. By keeping the label, namely the central area thereof, in this position, access to the interior of the package with a single hand is facilitated, without having to hold the central area with one hand and accessing the interior with the other. In the case of having to clean babies, a situation in which having two free hands is complicated and taking into consideration that one hand is usually needed to hold the baby's legs, opening the package and keeping it open with the free hand while pulling the necessary product out of same, usually a wet wipe, is complicated. In addition, the closure of the label on the package must be such that it ensures the air-tightness thereof when the label is closed. For this purpose, under the central area of the label there is arranged the removable adhesive label that is adhered on the surface of the package, allowing the movement of the label and therefore the opening of the package. It should be mentioned that the label is adhered to the package, closing the mouth, simply upon dropping down onto same, without the user having to press on the central area of the label for it to be adhered to the package. The weight of said rigid single-layer central area will achieve adhesion. In fact, due to the configuration of the central area of the label, a single layer of a rigid plastic material that is kept stretched out and flat without being bent in a vertical position, preferably polyester, it is possible to close the package from a vertical position of the central area by simply pushing same, such that the weight of the central area causes it to drop down to the surface of the package to which it is adhered, guaranteeing the air-tightness of the package and maintaining conditions of moisture of the product stored therein.

For the central of the label of this second preferred form to form an angle of about 90° with the surface of the fixed area, the perforation of the hinge must present a specific configuration which allows a projection of the central area to fit with the corresponding recess in the fixed area. For example, said configuration comprises at least one cut determined by a curved line in the perforation determining a concave part or projection in the central area and a convex part or recess in the fixed area, such that when said central area is lifted, the curvature of the concave part or projection is downwards, and extends below the surface demarcated by the fixed area. Both central and fixed areas are attached through other parts of the sheet. By means of the preceding configuration, when the central area is lifted to open the label, with said label being separated from the fixed area by at least the mentioned curved cut, the concave part of the central area will contact the upper surface of the package, slightly pressing on it and ensuring the approximately vertical position of the central area with respect to the fixed area, as well as with respect to the upper surface of the package. To close the label again, the central area is pushed towards the side opposite that of the opening, such that the weight of the central area causes it to drop down onto the mouth, covering said mouth and being adhered to the upper surface of the package. In the preceding description, a curved part in the perforation has been mentioned, but other geometric shapes are possible if, upon rotating the central area of the label, said parts project in the lower part, pressing on the upper surface of the package and ensuring the position of the central area by itself, i.e., without the help of agents or elements external to the label or package.

Additionally, this rigid single-layer label, may present, preferably on each side of the tab, a safety seal guaranteeing that the label has not been opened, i.e., they show that the package is tamper-proof. Said seals preferably consist of two parts preferably made of the same material as the rigid label and are attached to the central area by means of perforated attachment lines, and adhered to the package by means of an adhesive label, such that upon pulling on the tab the label is separated from the two seals but the seals remain adhered to the surface of the package. If the label is separated from the seals upon grabbing a package, it would be confirmed that the label has been opened or tampered with. The pressure generated between the central area of the label and these seals contributes to maintaining air-tightness when the label is closed. These guarantee seals may be adhered to the package by means of a second adhesive label or an adhesive label different from the already mentioned first and second adhesive labels.

Based on the foregoing, this second label therefore has four areas, a fixed area at one end, a practicable central area or movable area, tamper-proof, guarantee, or safety seals, at the end opposite the end of the fixed area, and the perimeter frame for adhering a rigid lid on same. The fixed area and the practicable area are attached by a perforation which, as mentioned above, allows the practicable area to be arranged in two positions, a closed position, i.e., on the mouth of the package covering it, and an open position, i.e., approximately vertical with respect to the fixed area or mouth or surface of the package where it is arranged. When the central area of the label is arranged approximately vertical, the angle formed between the central area of the label and the fixed area thereof is preferably between 75° and 105°.

During the manufacture of the package, the rigid single-layer label of this second preferred example is arranged on a surface thereof, preferably the upper surface, which is flat and made of a material that is more flexible than that of the label, and where there is arranged a perforation determining the mouth, which is usually elliptical or oval-shaped. The adhesion of the label to the package is performed by means of at least a first adhesive label arranged in the lower surface of the label, guaranteeing the attachment between both, and such that the practicable central area of the label is arranged on the perforation determining the mouth of the package, with said practicable central area being surrounded by the perimeter frame for the adhesion of a rigid lid. The fixed area of the label, the tamper-proof seals thereof, and even the perimeter frame, can be adhered to the package by means of a second adhesive label that is more resistant than the first adhesive label.

In general, and common to the different embodiments, the label object of the invention is preferably made of a transparent material which allows seeing the design and decoration of the surface on which it is adhered. Likewise, the label may present different shapes, for example, like that shown in the figures, square, rectangular, circular, or elliptical, among others. Likewise, the label may present the hinged attachment for displacement of the central area anywhere on the perimeter of said central area. Therefore, after arranging the label on the package, to achieve the first opening thereof, the tab or flap must be pulled on to separate the central area from the upper surface of the package

In the label first described as an embodiment, the label of material flexible is bent or folded on the hinged attachment, but if the central area or tab is no longer held, said central area returns to its closed position, covering the mouth of the package.

Moreover, in the label described above as a second embodiment, if said label has safety seals, in order to lift or open the central area the tab must be pulled on to separate the central area from said safety seals. As the practicable central area of the label is lifted, being separated from same, when it pivots with respect to the fixed area through the hinge, the perforated mouth of the package, which is separated from the rest of the package by breaking the perforation and said perforated area retaining the shape of the mouth adhered to the central area of the label, is achieved. By continuing to lift or pull on the central area of the label, the latter is positioned and kept at an approximately perpendicular position, between 75° and 105°, more preferably between 75° and 95°, and even more preferably between 75° and 90°, with respect to the fixed area, or mouth, due to the configuration of the hinge between the fixed area and the practicable area. The content of the package can thereby be accessed through the mouth without the label getting in the way or hindering access, and it is not necessary to hold said central area once the label is open, the user therefore having both hands free.

A second object of the present invention is a package according to claim 14, namely, a package for wet wipes or similar products, comprising a package with a mouth for pulling out wipes or similar products, and a label with the features discussed above, and where the practicable central area of the label is positioned on the mouth of the package.

Alternatively, the package comprises a rigid lid incorporated on the frame of the label without the protective flexible sheet, i.e., after removing the central area (5) of the flexible sheet. The lid, like the previous one, preferably comprises a base surround with a central gap, approximately coinciding with the central area of the label, and a lift-up cover with respect to said base surround such that the cover opens and closes on said base surround, preferably having a snap-fit closure to secure the position of the cover with respect to the surround in the closed position.

The preferred material of the package can be selected from polyethylene (PE), polystyrene (PS), polypropylene (PP), polyethylene terephthalate (PET), polyvinyl alcohol (EVOH), or a mixture thereof, or other similar products; the material of the label can be, for example, polystyrene (PS) or polypropylene (PP), among others, or mixtures of these or others, and the first adhesive label is preferably a removable adhesive label that allows being adhered and detached.

### DESCRIPTION OF THE DRAWINGS

To complete the description of the present invention and to help understand its features, a set of illustrative and non-limiting drawings is attached to the present specification as an integral part thereof.
Figure 1 shows a schematic upper plan view of an embodiment of the closure label for packages of wet wipes or similar products object of the invention, where the main parts and the elements it comprises can be seen.
Figure 2 shows a schematic side elevational depiction of the different layers comprising the closure label for packages of wet wipes or similar products according to the invention, which are depicted somewhat separated from one another and in an exaggerated proportional dimension to facilitate observing and distinguishing same.
Figure 3 shows a schematic plan view of the label of the invention including a reusable lid incorporated thereon.
Figure 4 shows a label according to the previous example arranged on a package with its central area lifted and with a (lifted) rigid lid also arranged on the package.
Figure 5 shows a label according to a second example of the invention, arranged on a package with its central area closed and with a (lifted) rigid lid also arranged on the package.
Figure 6 shows a label according to Figure 5, arranged on the package and lifted at about 90°.
Figure 7A shows an enlarged diagram of the hinged attachment of the label of the previous figure with its central area lifted with respect to its fixed area.
Figure 7B shows a diagram of the section of the previous figure according to section plane AA.

### PREFERRED EMBODIMENT OF THE INVENTION

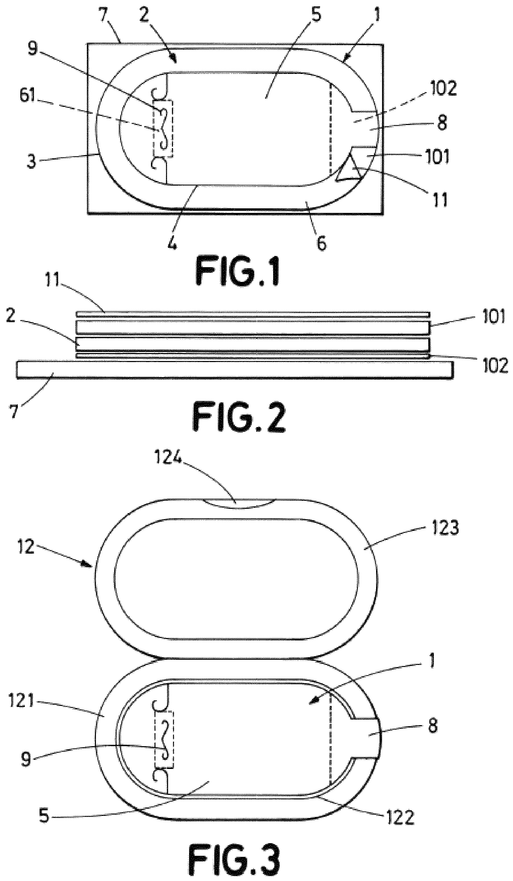

Therefore, as can be seen in Figures 1 to 3, the label in question is formed from a flexible laminar body (1) comprising at least a main layer (2) of plastic material, preferably polyethylene, although other materials may also be used, with an outer edge (3) having at least one perforated line (4) defining a practicable central area (5), that can be opened and closed on a mouth in the package (7), and a perimeter frame (6) fixed to the package (7) on which the label is incorporated, there furthermore being a flap or tab (8) coming out of the central area (5) and a hinged attachment (9) on the side opposite of the central area (5). Both are likewise defined by the perforated line (4) and also positioned on opposite sides of the perimeter frame (6).

The main layer (2) of plastic material coinciding with the central area (5) incorporates in the lower part at least a first removable adhesive label (102), allowing the opening or lifting and closing or lowering of the central area (5) multiple times to open and close the mouth of the package (7) by pulling on the flap (8) and lifting it or adhering it again.

Likewise, the upper face of the perimeter frame (6) also incorporates a second adhesive label (101), in this case covered with a preferably siliconized protective paper or plastic (11), such that once removed said protective paper or plastic (11) there can be incorporated on said perimeter frame (6) a rigid lid (12), for example made of polypropylene (PP), in turn formed by a base surround (121) with a central gap (122) coinciding or approximately coinciding with the central area (5) of the label, and a lift-up cover (123) opening and closing on the base surround (121) presenting a preferably snap-fit closure (124) to guarantee the closure of the cover on the surround. The specific shape and composition of the lid may vary depending on the design.

As mentioned, is removed the preferably siliconized protective paper or plastic (11) covering the second adhesive label (101) of the frame (6), and to facilitate the removal, the frame (6) and the paper or plastic (11) have a cut (61) which facilitates the user removing the protective paper or plastic (11) with a fingernail. The rigid lid (12) is then positioned on the second adhesive label (101). The tab (8) of the label projecting from the central area (5) will be arranged on the surround (121) of the rigid lid (12) (Figure 3), in the same way it was arranged on the perimeter frame (6) (Figure 1) to facilitate the opening of the label by making it simpler for a user grabbing the tab (8) of the central area (5) of said flexible label. Therefore, once the product contained in the package (7) has been used, the lid (12) may be removed or detached to be reused in another package having the closure label of the present invention.

Said second adhesive label (101) is more resistant than the first adhesive label, i.e., it presents greater adherence than the first adhesive label, since it allows both the removal of the preferably siliconized protective paper or plastic (11) and the adhering and detachment of the rigid lid (12). Therefore, the mentioned second adhesive label (101) must allow:
- putting the rigid lid on and taking it off (12),
- supporting the weight of the package (7) with its content when holding (7) by the rigid lid (12),
- reusing the rigid lid (12) in another pack (7), so no residue can be left on same once the rigid lid has been removed.

A lid may thereby be used in different packages, whereby reducing not only the use of plastic with the subsequent ecological advantage entailed, but it also allows customizing labels to be reused in different packages.

Double air-tightness is achieved by means of this label due to the existence of a first air-tightness barrier due to the resealable closure of central area (5) of the flexible label and due to the existence of a second barrier by means of the optional incorporation of the mentioned rigid lid (12).

As mentioned, to fix the label (1) to the package, it incorporates on the lower face of the main layer (2) at least one removable adhesive label (102), which is arranged on one part of the upper surface of the package (7), covering the mouth of said package (7). This part covering the mouth is pre-perforated such that when separating the central part (5) of the label for the first time, the part covering mouth is separated from or torn off the upper surface of the package (7) because the resistance to separation between said part and the rest of the upper surface offered by the perforation is less than the resistance of said first adhesive label between the central area (5) and the part covering the mouth. When said part covering the mouth is separated from the rest of the upper surface of the package (7), access to the interior thereof is facilitated.

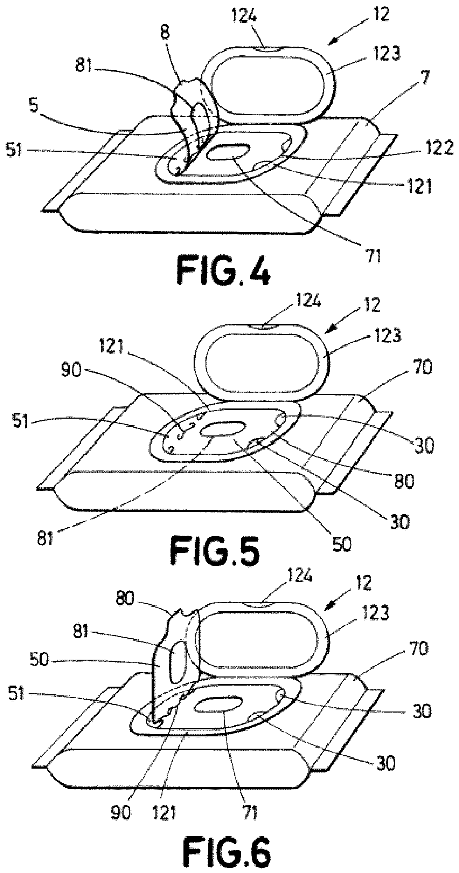

Figure 4 shows a label as described above with a flexible laminar body, determining a flexible central area (5), arranged on a package (7), with the central area (5) of the label lifted, and presenting a lid (12) also incorporated in the label.

Figures 5 to 7 show an alternative construction for a resealable label of a flexible package which incorporates, unless otherwise mentioned, the same elements as the previous construction, although they cannot be observed as they are covered by the rigid lid (12), and namely with the base surround (121) thereof. The label with a flexible laminar body of the previous example has been replaced with a label with a rigid single-layer laminar body.

Namely, the central area (50) is made of a rigid single-layer plastic material and has a hinged attachment formed by a perforation (90) with a configuration which allows maintaining the central area at about 90° with respect to the upper surface of the package (70). This feature allows more readily accessing the content of the package without the label interrupting access to the interior of the package. The hinged attachment with a perforation (90) splits the label into two parts, that is, the practicable central area (50) and a fixed area (51). In this construction, the central area (50) of the rigid single-layer label has a tab (80) and on at least one side of said tab (80), though preferably on each side of said tab (80), there is arranged a guarantee or safety seal (30) guaranteeing that the central area (50) of the label has not been opened and therefore has not been tampered with. Said seals (30) consist of two parts of the same material as the central area (50) of the rigid label connected to said central area (50) by means of perforated attachment lines, and adhered to the package (70), such that upon pulling on the tab (80) the central area (50) of the label is separated from the two seals (30) which are adhered to the upper surface of the package (70). The fact that the central area (50) of the label is separated from the seals (30) would confirm that the label had been opened before it was sold or used.

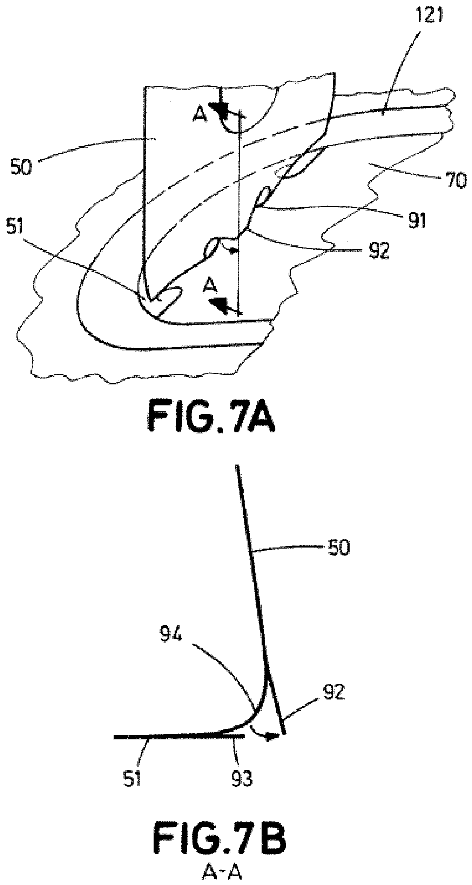

During the separation of the central area (50) from the surface of the package (70) and from the perimeter frame (covered in Figures 5 and 6 by the lid 12), the part of the package (81) covering the mouth (71) will be adhered to the lower surface of the practicable central area (50), thereby clearing the mouth (71) so as to access the content inside the package (70), usually wet wipes. If the user continues to pull on the flap (80) or on the central area (50), said central area (50) continues to pivot with respect to the hinged attachment (90) until, due to the configuration thereof, said central area (50) reaches a given approximately perpendicular position with respect to the fixed area (51) of the label. The central area (50) will form an angle between 75° and 105° with said fixed area (x), preferably between 75° and 95°, and more preferably between 80° and 90°. The central area (50) will be kept in that position due to the configuration of the hinged attachment (90) and the rigidity of the plastic material forming the single-layer sheet of the label, since it prevents central area (50) from bending, being kept flat at all times, particularly when it is positioned in an approximately perpendicular position with respect to the fixed area (51). As mentioned, this hinged attachment (90) formed by a perforation in the flat, rigid single-layer sheet is designed for the central (50) of the label to be positioned approximately perpendicular with respect to the surface of the fixed area (51), as can be observed in Figures 7A and 7B. For this purpose, the perforation of the hinged attachment (90) has a cut determined by a line (91), preferably with curves, determining a projecting or concave part (92) in the central area (50) and a recessed or convex part (93) in the fixed area (51), such that when said central area is lifted (50) the curvature of the projecting or concave part (92) is downwards. Both the central area (50) and the fixed area (51) are attached through other parts (94) of the label which allow the bending or articulation (94) of one area (50) with respect to the other area (51). By means of the preceding configuration, when the central area is lifted (50) in order to lift or open the label, by pivoting this area (50) of the fixed area (51) through at least the mentioned cut (90), the projecting or concave part (92) of the central area (50) will contact the upper surface of the package (70), slightly pressing on it and ensuring the approximately vertical position of the central area (50) with respect to the fixed area (51) as well as with respect to the upper surface of the package (70). To close the label again, the central area (50) is pushed towards the side opposite that of the opening, such that the weight of the central area (50) causes it to drop down onto the mouth (71), covering said mouth (71) and being adhered to the upper surface of the package (70).

The label is preferably transparent to enable seeing the upper surface of the package (70), thereby preventing having to decorate the label. Likewise, the label may present different shapes, that is, rectangular, square, circular, elliptical, triangular, etc.

A second object of the invention is a package (7, 70) incorporating a label with a perimeter frame (6) with an adhesive label (101) thereon for the optional adherence of a rigid lid (12), namely, a package (7, 70) for wet wipes or similar products, comprising a package (7, 70) with a mouth for pulling out wipes or similar products (71), and a label with the features discussed above, and where the practicable central area (5, 50) of the label is positioned on the mouth (71) of the package.

Additionally, the package comprises a rigid lid (12) incorporated on the frame (6) of the label after removing a protective sheet (11) from same. Said lid (12) preferably comprises a base surround (121) with a central gap (122), preferably coinciding with the central area (5, 50) of the label, and a lift-up cover (123) opening and closing on said base surround (121), and it has a closure (124) to secure the position of the cover (123) with respect to the surround (121) when the lid (12) is closed.

## Claims

1. Closure label for packages of wet wipes or similar products, formed from a laminar body (1) with at least one main layer (2) of plastic material, **characterized in that** it comprises:
- an inner perforated line (4) separating a practicable central area (5) for accessing the mouth of a package (7) and a perimeter frame (6) for being adhered to the package (7) to which the label is incorporated,
- a first removable adhesive label (102) incorporated in the lower part at least in the practicable central area (5) of the main layer (2) for the opening and closing of said central area (5) multiple times, and
- a second adhesive label (101) incorporated on the upper face of the perimeter frame (6) covered by a removable protective sheet (11).

2. Label according to claim 1, **characterized in that** it comprises a hinged attachment (9) defined by the perforated line (4) and arranged on one side of the central area (5) and of the perimeter frame (6),

3. Label according to any of the preceding claims, **characterized in that** it comprises a flap or tab (8) on one side of the central area (5) and defined by the perforated line (4).

4. Label according to any of the preceding claims, **characterized in that** the second adhesive label (101) of the upper face of the perimeter frame (6) is of the removable type and more resistant than the first adhesive label (102).

5. Label according to any of the preceding claims, **characterized in that** the second adhesive label (101) of the upper face of the perimeter frame (6) is covered with protective paper or plastic (11).

6. Label according to any of the preceding claims, **characterized in that** the flap (8) is positioned on a segment of the perimeter frame (6).

7. Label according to any of the preceding claims, **characterized in that** it comprises a rigid lid (12) incorporated on the frame (6), said lid comprising a base surround (121) with a central gap (122) and a lift-up cover (123) with respect to the base surround (121) with a closure (124) to secure the closing between the cover (123) and the base surround (121).

8. Label according to claim 7, **characterized in that** the flap (8) is positioned on the base surround (121) of the lid (1).

9. Label according to claim 7 or 8, **characterized in that** the rigid lid (12) is removable and reusable in other packages.

10. Label according to any of claims 7 to 9, **characterized in that** the rigid lid (12) is made of polypropylene (PP).

11. Label according to any of claims 2 to 10, **characterized in that** the hinged attachment (90) comprises a perforation which allows maintaining the central area (50) of the label, of a single-layer laminar body made of a rigid plastic material, in an approximately perpendicular position with respect to the upper surface of the package (70), where the mouth (81) is positioned, in the raised position of the central area (50).

12. Label according to any of claims 3 to 11, **characterized in that** it comprises at least on one side of the flap or tab (80) a safety or guarantee seal (30).

13. Label according to any of the preceding claims, **characterized in that** the hinged attachment (90) has a cutting line (91) with at least one projecting or concave part (92) and one recessed or convex part (93) such that when the central area (50) is arranged in the approximately perpendicular position with respect to the fixed area (51), the projecting or concave part (92) extends below the surface demarcated by the fixed area (51).

14. Package for wet wipes or similar products, **characterized in that** it comprises:
- a package with a mouth for pulling out wipes or similar products, and
- a label according to claim 1, wherein the practicable central area (5) is positioned on the mouth of the package.

15. Package according to claim 12, **characterized in that** it comprises a rigid lid (12) incorporated on the frame (6), without the protective sheet (11), said lid comprising a base surround (121) with a central gap (122) and a lift-up cover (123) with respect to the base surround (121) with a closure (124) to secure the closing between the cover (123) and the base surround (121).
